# EUROPÄISCHE PATENTANMELDUNG

(11) **EP 1 754 534 A1**
(43) Veröffentlichungstag der Anmeldung: **21.02.2007**
(21) Anmeldenummer: 05016846.7
(22) Anmeldetag: 03.08.2005
(51) Int. Cl.: B01J 20/285, C08F 216/14, C08F 26/06

(54) **Hydrophiles vernetztes Polymer**

(71) Anmelder: Merck Patent GmbH, 64293 Darmstadt (DE)
(72) Erfinder: Jöhnck, Matthias, Dr., 64283 Darmstadt (DE); Sabrowski, Eckhard, Dr., 26862 Rosslau (DE)

(57) **Zusammenfassung**

Die vorliegende Erfindung betrifft ein hydrophiles vernetztes Polymer, bevorzugt in Form von porösen Teilchen, sowie dessen Herstellung und Verwendung. Das erfindungsgemäße Polymer wird durch Polymerisation aus kettenbildenden hydrophilen Vinylethern und vernetzenden bevorzugt heterocyclischen Divinylethern erzeugt.

## Beschreibung

Die vorliegende Erfindung betrifft ein hydrophiles vernetztes Polymer, bevorzugt in Form von porösen Teilchen, sowie dessen Herstellung und Verwendung. Das erfindungsgemäße Polymer wird durch Polymerisation aus kettenbildenden hydrophilen Vinylethern und vernetzenden N,N'-Divinyl-Verbindungen, bevorzugt heterocyclischen N,N'-Divinyl-Verbindungen, erzeugt.

Hydrophile, vernetzte polymere Trägermaterialien werden vielfach in Bereichen wie Chromatographie, Festphasensynthese oder Katalyse eingesetzt. Insbesondere für den Einsatz als Trägermaterial in der Chromatographie sollten derartige Polymere folgende Eigenschaften aufweisen:
- Die Materialien sollten ausreichend hydrophil sein, damit insbesondere ein Einsatz in der Biochromatographie möglich ist
- Die Materialien sollten bei Bedarf mit Separationseffektoren modifiziert werden können, damit ihre Trenneigenschaften an das jeweilige Trennproblem angepasst werden können
- Das Polymer muss ausreichend hydrolysestabil sein
- Insbesondere für Anwendungen im Bereich der HochdruckFlüssigkeitschromatographie muss das Material eine ausreichende Druck-Fluß-Stabilität aufweisen
- Die Materialien sollten ausreichende Porengrößen besitzen

Zudem sollten derartige Polymere möglichst einfach und reproduzierbar herzustellen sein.

WO 03/104294 offenbart Polyvinylether insbesondere zum Einsatz in der Festphasensynthese. Die offenbarten Polymere zeigen zumeist ein sehr starkes Quellverhalten.

DE 37 14 276 und DE 3344912 offenbaren vernetzte Polymere auf Basis von Vinylacetaten. Um ein hydrophiles Polymer zu erzeugen, müssen die Acetatgruppen nachträglich verseift werden.

WO 9513861 offenbart Polyvinylether für Separationszwecke welche durch kationische Polymerisation hergestellt werden. Die beschriebene kationische Polymerisation muss in Kombination mit einer aufwendigen Schutzgruppenchemie durchgeführt werden.

EP 0 482 339 offenbart ein Copolymer auf Basis von Allylmonomeren. Insbesondere das auf EP 0 482 339 basierende Copolymer aus 1,2,-Dihydroxy-3-allyloxy-propan und N, N'-Methylenbisacrylamid, kommerziell erhältlich unter dem Namen FractoPrep® (Merck KGaA, Deutschland), zeigt bezüglich Hydrophilie, Hydrolysestabilität und Druck-Fluß-Stabilität für die Biochromatographie gute Eigenschaften. Nachteil dieses Materials ist jedoch das aufwendige Herstellverfahren mittels inverser Suspensionspolymerisation.

Aufgabe der vorliegenden Erfindung war es daher, ein hydrophiles polymeres Trägermaterial bereitzustellen, das die vorgenannten Anforderungen bezüglich Porosität, Hydrophilie, Hydrolysestabilität und Druck-Fluß-Stabilität erfüllt und zudem einfach herzustellen ist.

Es wurde gefunden, dass durch Copolymerisation von hydrophil substituierten Alkylvinylethern mit vernetzenden bevorzugt heterocyclischen N,N'-Divinyl-Verbindungen hydrophile Polymere mit guten Eigenschaften insbesondere für die Biochromatographie hergestellt werden können. Die Polymere werden bevorzugt mittels Suspensionspolymerisation hergestellt.

Gegenstand der vorliegenden Erfindung ist daher ein hydrophiles vernetztes Polymer auf Basis eines Copolymers zumindest aus
a) mindestens einem hydrophil substituierten Alkylvinylether der Formel I 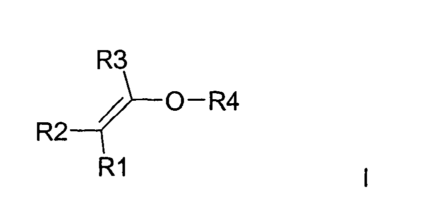 wobei R1, R2, R3 unabhängig voneinander H oder C1 bis C6 Alkyl, bevorzugt H oder -CH₃ sein können
   und R4 ein Rest ist, der zumindest eine Hydroxylgruppe trägt und
b) mindestens einem Vernetzer entsprechend Formel II und/oder III und/oder IV, mit 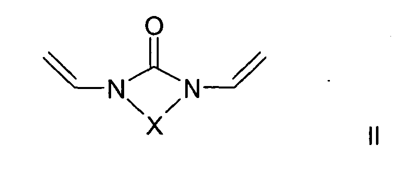 wobei X ein zweiwertiger Alkylrest mit 2 bis 5 C-Atomen, bevorzugt 2 oder 3 C-Atomen, ist, bei dem ein oder mehrere nicht benachbarte und nicht in direkter Nachbarschaft von N befindliche Methylengruppen durch O, C=O, S, S=O, SO₂, NH, NOH oder N ersetzt sein können und ein oder mehrere H-Atome der Methylengruppen unabhängig voneinander durch Hydroxylgruppen, Cl-C6-Alkyl, Halogen, NH₂, C5-C10-Aryl, NH-(C1-C8)-Alkyl, N-(C1-C8)-Alkyl₂, C1-C6-Alkoxy oder C1-C6-Alkyl-OH substituiert sein können, und 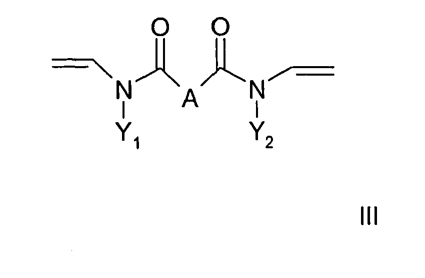 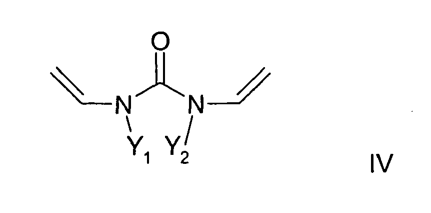 wobei Y1 und Y2 in Formel III und IV unabhängig voneinander
   C1 bis C10 Alkyl oder Cycloalkyl sind, wobei ein oder mehrere nicht benachbarte Methylengruppen oder nicht in direkter Nachbarschaft von N befindliche Methylengruppen durch O, C=O, S, S=O, SO₂, NH, NOH oder N ersetzt sein können und ein oder mehrere H der Methylengruppen unabhängig voneinander durch Hydroxygruppen, C1-C6-Alkyl, Halogen, NH₂, C5-C10-Aryl, NH(C1-C8)Alkyl, N(C1-C8)Alkyl₂, C1-C6-Alkoxy oder C1-C6-Alkyl-OH substituiert sein können,
   oder C6 bis C18 Aryl sind, wobei ein oder mehrere H in dem Arylsystem unabhängig voneinander durch Hydroxygruppen, C1-C6-Alkyl, Halogen, NH₂, NH(C1-C8)Alkyl, N(C1-C8)Alkyl_{2,} C1-C6-Alkoxy oder C1-C6-Alkyl-OH substituiert sein können und

A ein zweiwertiger Alkylrest mit 2 bis 5 C-Atomen, bevorzugt 2 oder 3 C-Atomen, ist, bei dem ein oder mehrere nicht benachbarte Methylengruppen oder nicht in direkter Nachbarschaft von N befindliche Methylengruppen durch O, C=O, S, S=O, SO₂, NH, NOH oder N ersetzt sein können und ein oder mehrere H der Methylengruppen unabhängig voneinander durch Hydroxygruppen, C1-C6-Alkyl, Halogen, NH₂, C5-C10-Aryl, NH(C1-C8)Alkyl, N(C1-C8)Alkyl₂, C1-C6-Alkoxy oder C1-C6-Alkyl-OH substituiert sein können.

Typischerweise ist R4 in Formel I ein Alkyl-Rest, ein cycloaliphatischer Rest oder ein Aryl-Rest, der zumindest eine Hydroxylgruppe trägt.

In einer bevorzugten Ausführungsform ist R4 in Formel I
ein geradkettiger oder verzweigter C1 bis C10 Alkylrest, bei dem ein oder mehrere nicht benachbarte Methylengruppen durch O, C=O, S, S=O, SO₂, NH, NOH, N ersetzt sein können und/oder bei dem ein oder mehrere H-Atome unabhängig voneinander durch C1-C6-Alkyl, C5-C10-Aryl, Halogen, NH₂, NH(C1-C8)Alkyl, N(C1-C8)Alkyl₂, C1-C6-Alkoxy oder C1-C6-Alkyl-OH substituiert sein können und bei dem mindestens eine OH-Gruppe entweder an dem C1 bis C10 Alkylrest oder an einem Substituenten vorhanden ist,
oder ein cycloaliphatischer Rest mit typischerweise 5 bis 10 C-Atomen, bei dem ein oder mehrere nicht benachbarte Methylengruppen durch O, C=O, S, S=O, SO₂, NH, NOH, N ersetzt sein können und/oder bei dem ein oder mehrere H-Atome des cycloaliphatischen Restes unabhängig voneinander durch C1-C6-Alkyl, C5-C10-Aryl, Halogen, NH₂, NH(C1-C8)Alkyl, N(C1-C8)Alkyl₂, C1-C6-Alkoxy oder C1-C6-Alkyl-OH substituiert sein können, wobei mindestens eine OH-Gruppe entweder am cycloaliphatischen Ring oder an einer Seitenkette bzw. einem Substituenten vorhanden ist, oder ein
C6 bis C18 Aryl-Rest, wobei ein oder mehrere H-Atome in dem Aryl-Rest unabhängig voneinander durch Hydroxygruppen, C1-C6-Alkyl, C5-C10-Aryl, Halogen, NH₂, NH(C1-C8)Alkyl, N(C1-C8)Alkyl₂, C1-C6-Alkoxy oder C1-C6-Alkyl-OH substituiert sein können, wobei mindestens eine OH-Gruppe entweder am Aryl-Rest oder an einer Seitenkette bzw. einem Substituenten vorhanden ist, oder ein
C5 bis C18 Heteroaryl-Rest, wobei ein oder mehrere H-Atome in dem Heteroaryl-Rest unabhängig voneinander durch Hydroxygruppen, C1-C6-Alkyl, C5-C10-Aryl, Halogen, NH₂, NH(C1-C8)Alkyl, N(C1-C8)Alkyl_{2,} C1-C6-Alkoxy oder C1-C6-Alkyl-OH substituiert sein können, wobei mindestens eine OH-Gruppe entweder am Heteroaryl-Rest oder an einer Seitenkette bzw. einem Substituenten vorhanden ist.

In einer besonders bevorzugten Ausführungsform ist R4 in Formel I
ein geradkettiger oder verzweigter C1 bis C10 Alkylrest, bei dem ein oder mehrere nicht benachbarte Methylengruppen durch O, S, SO₂ oder NH ersetzt sein können und/oder bei dem ein oder mehrere H-Atome unabhängig voneinander durch C1-C6-Alkyl, C5-C10-Aryl, C1-C6-Alkoxy oder C1-C6-Alkyl-OH substituiert sein können und bei dem mindestens eine OH-Gruppe entweder an dem C1 bis C10 Alkylrest oder an einem Substituenten vorhanden ist,
oder ein cycloaliphatischer Rest mit typischerweise 5 bis 10 C-Atomen, bei dem ein oder mehrere nicht benachbarte Methylengruppen durch O, S, SO₂ oder NH ersetzt sein können und/oder bei dem ein oder mehrere H-Atome des cycloaliphatischen Restes unabhängig voneinander durch C1-C6-Alkyl, C5-C10-Aryl, C1-C6-Alkoxy oder C1-C6-Alkyl-OH substituiert sein können, wobei mindestens eine OH-Gruppe entweder am cycloaliphatischen Ring oder an einer Seitenkette bzw. einem Substituenten vorhanden ist, oder ein
C6 bis C14 Aryl-Rest , wobei ein oder mehrere H-Atome in dem Aryl-Rest unabhängig voneinander durch Hydroxygruppen, C1-C6-Alkyl, C5-C10-Aryl, C1-C6-Alkoxy oder C1-C6-Alkyl-OH substituiert sein können, wobei mindestens eine OH-Gruppe entweder am Aryl-Rest oder an einer Seitenkette bzw. einem Substituenten vorhanden ist, oder ein
C6 bis C14 Heteroaryl-Rest, in dem als Heteroatom mindestens ein N-Atom vorhanden ist und wobei ein oder mehrere H-Atome in dem Heteroaryl-Rest unabhängig voneinander durch Hydroxygruppen, C1-C6-Alkyl, C5-C10-Aryl, C1-C6-Alkoxy oder C1-C6-Alkyl-OH substituiert sein können, wobei mindestens eine OH-Gruppe entweder am Heteroaryl-Rest oder an einer Seitenkette bzw. einem Substituenten vorhanden ist.

In einer besonders bevorzugten Ausführungsform wird als hydrophil substituierter Alkylvinylether 1,2-Ethandiolmonovinylether, 1,3-Propandiolmonovinylether, 1,4-Butandiolmonovinylether, 1,6-Hexandiolmonovinylether oder Diethylenglykolmonovinylether und als cycloaliphatischer Vinylether Cyclohexandimethanolmonovinylether eingesetzt.

In einer weiteren bevorzugten Ausführungsform wird als Vernetzer Divinylethylenharnstoff (1,3-Divinylimidazolin-2-on) oder Divinylpropylenharnstoff (1,3-Divinyl-tetrahydropyrimidin-2-on) eingesetzt.

In einer anderen bevorzugten Ausführungsform ist das Polymer porös mit Porengrößen zwischen 2 und 200 nm.

In einer anderen Ausführungsform liegt das Polymer in Form von Partikeln mit einem Durchmesser zwischen 3 und 300 µm vor.

In einer anderen Ausführungsform ist das Polymer mit Separationseffektoren derivatisiert.

In einer bevorzugten Ausführungsform ist das Polymer mit tentakelartigen Strukturen derivatisiert, die durch Pfropfpolymerisation unter Cer(IV)-Katalyse auf das Polymer aufgebracht wurden.

In einer besonders bevorzugten Ausführungsform sind die tentakelartigen Strukturen Copolymerisate, die aus zwei oder mehreren unterschiedlichen Monomeren erzeugt wurden.

Gegenstand der vorliegenden Erfindung ist auch ein Verfahren zur Herstellung von Polymeren, dadurch gekennzeichnet, dass zumindest ein hydrophil substituierter Alkylvinylether der Formel I und ein Vernetzer entsprechend Formel II und/oder III und/oder IV copolymerisiert werden, mit 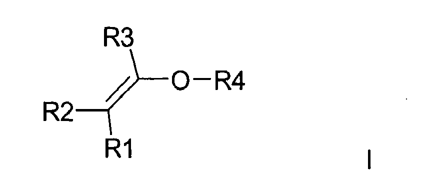 wobei R1, R2, R3 unabhängig voneinander H oder C1 bis C6 Alkyl, bevorzugt H oder -CH₃ sein können
und R4 ein Rest ist, der zumindest eine Hydroxylgruppe trägt und 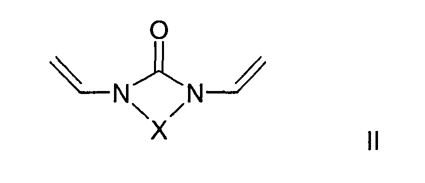 wobei X ein zweiwertiger Alkylrest mit 2 bis 5 C-Atomen, bevorzugt 2 oder 3 C-Atomen, ist, bei dem ein oder mehrere nicht benachbarte und nicht in direkter Nachbarschaft von N befindliche Methylengruppen durch O, C=O, S, S=O, SO2, NH, NOH oder N ersetzt sein können und ein oder mehrere H-Atome der Methylengruppen unabhängig voneinander durch Hydroxylgruppen, C1-C6-Alkyl, Halogen, NH₂, C5-C10-Aryl, NH-C1-C8-Alkyl, N-C1-C8-Alkyl₂, C1-C6-Alkoxy oder C1-C6-Alkyl-OH substituiert sein können,und 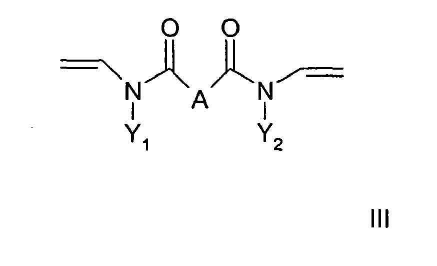 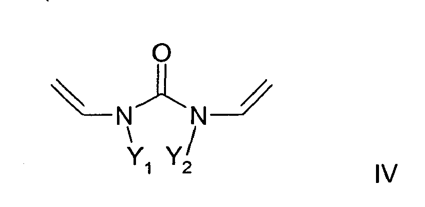 wobei Y1 und Y2 in Formel III und IV unabhängig voneinander
C1 bis C10 Alkyl oder Cycloalkyl sind, wobei ein oder mehrere nicht benachbarte Methylengruppen oder nicht in direkter Nachbarschaft von N befindliche Methylengruppen durch O, C=O, S, S=O, SO₂, NH, NOH oder N ersetzt sein können und ein oder mehrere H der Methylengruppen unabhängig voneinander durch Hydroxygruppen, C1-C6-Alkyl, Halogen, NH₂, C5-C10-Aryl, NH(C1-C8)Alkyl, N(C1-C8)Alkyl_{2,} C1-C6-Alkoxy oder C1-C6-Alkyl-OH substituiert sein können,
oder C6 bis C18 Aryl sind, wobei ein oder mehrere H in dem Arylsystem unabhängig voneinander durch Hydroxygruppen, C1-C6-Alkyl, Halogen, NH₂, NH(C1-C8)Alkyl, N(C1-C8)Alkyl_{2,} C1-C6-Alkoxy oder C1-C6-Alkyl-OH substituiert sein können und

A ein zweiwertiger Alkylrest mit 2 bis 5 C-Atomen, bevorzugt 2 oder 3 C-Atomen, ist, bei dem ein oder mehrere nicht benachbarte Methylengruppen oder nicht in direkter Nachbarschaft von N befindliche Methylengruppen durch O, C=O, S, S=O, SO₂, NH, NOH oder N ersetzt sein können und ein oder mehrere H der Methylengruppen unabhängig voneinander durch Hydroxygruppen, C1-C6-Alkyl, Halogen, NH₂, C5-C10-Aryl, NH(C1-C8)Alkyl, N(C1-C8)Alkyl₂, C1-C6-Alkoxy oder C1-C6-Alkyl-OH substituiert sein können.

In einer bevorzugten Ausführungsform ist R4 in Formel I
ein geradkettiger oder verzweigter C1 bis C10 Alkylrest, bei dem ein oder mehrere nicht benachbarte Methylengruppen durch O, C=O, S, S=O, SO₂, NH, NOH, N ersetzt sein können und/oder bei dem ein oder mehrere H-Atome unabhängig voneinander durch C1-C6-Alkyl, C5-C10-Aryl, Halogen, NH₂, NH(C1-C8)Alkyl, N(C1-C8)Alkyl₂, C1-C6-Alkoxy oder C1-C6-Alkyl-OH substituiert sein kann und bei dem mindestens eine OH-Gruppe entweder an dem C1 bis C10 Alkylrest oder an einem Substituenten vorhanden ist,
oder ein cycloaliphatischer Rest mit typischerweise 5 bis 10 C-Atomen, bei dem ein oder mehrere nicht benachbarte Methylengruppen durch O, C=O, S, S=O, SO₂, NH, NOH, N ersetzt sein können und/oder bei dem ein oder mehrere H-Atome des cycloaliphatischen Restes unabhängig voneinander durch C1-C6-Alkyl, C5-C10-Aryl, Halogen, NH₂, NH(C1-C8)Alkyl, N(C1-C8)Alkyl₂, C1-C6-Alkoxy oder C1-C6-Alkyl-OH substituiert sein können, wobei mindestens eine OH-Gruppe entweder am cycloaliphatischen Ring oder an einer Seitenkette bzw. einem Substituenten vorhanden ist, oder ein
C6 bis C18 Aryl-Rest, wobei ein oder mehrere H-Atome in dem Aryl-Rest unabhängig voneinander durch Hydroxygruppen, C1-C6-Alkyl, C5-C10-Aryl, Halogen, NH₂, NH(C1-C8)Alkyl, N(C1-C8)Alkyl₂, C1-C6-Alkoxy oder C1-C6-Alkyl-OH substituiert sein können, wobei mindestens eine OH-Gruppe entweder am Aryl-Rest oder an einer Seitenkette bzw. einem Substituenten vorhanden ist, oder ein
C5 bis C18 Heteroaryl-Rest, wobei ein oder mehrere H-Atome in dem Heteroaryl-Rest unabhängig voneinander durch Hydroxygruppen, C1-C6-Alkyl, C5-C10-Aryl, Halogen, NH₂, NH(C1-C8)Alkyl, N(C1-C8)Alkyl_{2,} C1-C6-Alkoxy oder C1-C6-Alkyl-OH substituiert sein können, wobei mindestens eine OH-Gruppe entweder am Heteroaryl-Rest oder an einer Seitenkette bzw. einem Substituenten vorhanden ist.

In einer bevorzugten Ausführungsform wird eine radikalische Suspensionspolymerisation durchgeführt.

In einer besonders bevorzugten Ausführungsform wird eine radikalische Suspensionspolymerisation in Wasser als Suspensionsmittel in Gegenwart von mindestens einem Suspensionsstabilisator und optionalen weiteren Zusätzen, bevorzugt anorganischen Salzen und grenzflächenaktiven Verbindungen durchgeführt.

In einer Ausführungsform liegt die Temperatur während der Polymerisation zwischen 40 und 100°C.

In einer bevorzugten Ausführungsform werden hydrophil substituierte Alkylvinylether und Vernetzer in einem Massenverhältnis zwischen 10:90 und 80:20 eingesetzt.

Gegenstand der vorliegenden Erfindung ist auch eine Chromatographiesäule, Kapillare oder Kartusche enthaltend ein erfindungsgemäßes Polymer als Sorbens oder Trägermaterial.

Gegenstand der vorliegenden Erfindung ist auch die Verwendung eines erfindungsgemäßen hydrophilen vernetzten Polymers als Sorbens in der Chromatographie, als Trägermaterial zur Immobilisierung biologisch oder katalytisch aktiver Substanzen oder als Trägermaterial für eine Festphasensynthese.

Abbildung 1 zeigt das Retentionsverhalten des erfindungsgemäßen Polymers bei Aufgabe von Proteinen. Nähere Angaben finden sich in Beispiel 2.

Abbildung 2 zeigt die experimentell bestimmten Verteilungskoeffizienten Kd von Dextranen mit unterschiedlichen Molekulargewichten. Nähere Angaben finden sich in Beispiel 3.

Abbildung 3 zeigt die Lagerstabilität eines erfindungsgemäßen Polymers in verdünnter Natronlauge. Nähere Angaben finden sich in Beispiel 4.

Erfindungsgemäß bedeutet der Begriff "cycloaliphatischer Rest" einen gesättigten Kohlenwasserstoff-Rest, bei dem alle oder zumindest ein Teil der Kohlenwasserstoff-Einheiten Bestandteil einer cyclischen Struktur sind.

Erfindungsgemäß bedeutet N(C1-C8)Alkyl₂ einen zumindest mit zwei AlkylResten substituierten Stickstoff. Die beiden Alkylreste können dabei unabhängig voneinander 1 bis 8 C-Atome in geradkettiger oder verzweigter Form aufweisen.

Erfindungsgemäß ist ein Heteroaryl-Rest ein zumindest partiell aromatischer Rest, der sich von einem Aryl-Rest darin unterscheidet, dass ein oder mehrere nicht benachbarte C-Atome durch N, S oder O ersetzt sind. Dem Fachmann ist klar, dass aufgrund der Valenzen die Heteroatome gegebenenfalls mit H, C1-C6-Alkyl oder C1-C6-Alkyl-OH substituiert sein können.

Das erfindungsgemäße Polymer ist ein hydrophiles, vernetztes Polymer auf Basis eines Copolymers zumindest aus
a) mindestens einem hydrophil substituierten Alkylvinylether der Formel I 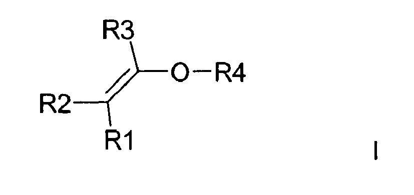 wobei die Reste R1, R2, R3 und R4 die vorgenannten Bedeutungen haben, und
b) mindestens einem Vernetzer entsprechend Formel II und/oder III und/oder IV 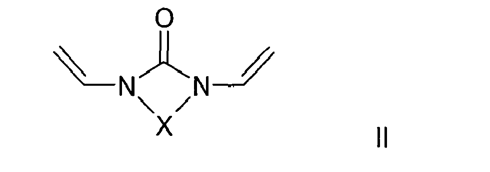 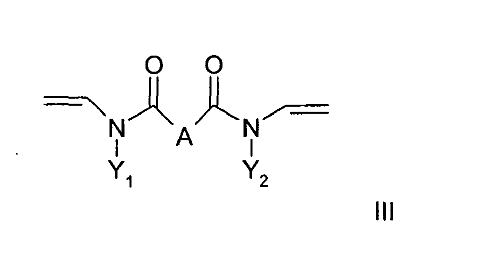 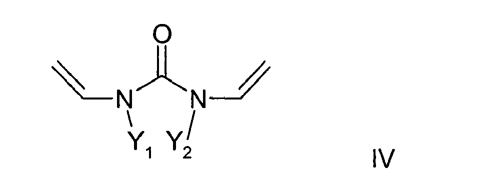 wobei die Substituenten X, A, Y1 und Y2 die vorgenannten Bedeutungen haben.

Das bedeutet, das Polymer entsteht durch Copolymerisation von zumindest einer Verbindung aus der Gruppe der hydrophil substituierten Alkylvinylether gemäß Formel I und zumindest einer Verbindung aus der Gruppe der Vernetzer gemäß Formel II und/oder III und/oder IV. Bevorzugt wird nur eine Verbindung aus der Gruppe der hydrophil substituierten Alkylvinylether gemäß Formel I und eine Verbindung aus der Gruppe der Vernetzer gemäß Formel II, III oder IV eingesetzt. Es können ein oder mehrere Verbindungen aus der Gruppe der hyrophil substituierten Alkylvinylether der Formel I und/oder ein oder mehrere Verbindungen aus der Gruppe der Vernetzer gemäß Formel II und/oder III und/oder IV eingesetzt werden. Weiterhin können dem Polymerisationsgemisch weitere polymerisierbare Verbindungen zugesetzt werden, die mit in das Polymergerüst einpolymerisert werden. Typischerweise sind dies Verbindungen mit mindestens einer polymerisierbaren Doppelbindung. Bevorzugt wird nur eine Verbindung aus der Gruppe der hydrophil substituierten Alkylvinylether gemäß Formel I und eine Verbindung aus der Gruppe der Vernetzer gemäß Formel II, III oder IV eingesetzt.

In einer bevorzugten Ausführungsform wird als hydrophil substituierter Alkylvinylether 1,2-Ethandiolmonovinylether,
1,3-Propandiolmonovinylether, 1,4-Butandiolmonovinylether, 1,6-Hexandiolmonovinylether oder Diethylenglycolmonovinylether und als cycloaliphatischer Vinylether Cyclohexandimethanolmonovinylether eingesetzt.

Als Vernetzer werden bevorzugt Vebindungen der Formel II eingesetzt. Bevorzugt wird Divinylpropylenharnstoff (1,3-Divinyl-tetrahydropyrimidin-2-on) oder besonders bevorzugt Divinylethylenharnstoff (1,3-Divinylimidazolin-2-on) eingesetzt.

Der Anteil der hydrophil substituierten Alkylvinylether am Gewicht des Polymeren liegt typischerweise zwischen 1 (Gewichts) % und 90 (Gewichts)% oder einem maximalen Gewichtsanteil des Alkylvinylethers, der einem Molverhältnis von 2:1 bezogen auf einen bifunktionellen Vernetzer entspricht, falls der Alkylvinylether nicht homopolymerisiert. Bevorzugt liegt der Anteil der hydrophil substituierten Alkylvinylether zwischen 10 und 80%, besonders bevorzugt zwischen 35 und 60%. Dementsprechend liegt der Anteil des Vernetzers zwischen 10 und 99, bevorzugt zwischen 20 und 90%, besonders bevorzugt zwischen 40 und 65%.

Die verfahrenstechnische Ausführung der Copolymerisation von ungesättigten Verbindungen ist dem Fachmann bekannt. Dazu wird eine radikalische Polymerisation durchgeführt. Bevorzugt wird eine durch Radikale initiierte Suspensionspolymerisation, auch Perlpolymerisation genannt, durchgeführt. Je nach Lösungsverhalten der Monomere wird bei in Wasser unlöslichen oder wenig löslichen Monomeren, die auch als Öl bezeichnet werden, in besonders einfacher Ausführung eine Öl in Wasser Suspensionspolymerisation (Normalphasenpolymerisation) durchführt. Bei in Wasser löslichen Monomeren werden hingegen diese in Wasser gelöst und in einem nicht bzw. nur wenig mit Wasser mischbaren organischen Lösungsmittel suspendiert und polymerisiert (Inverse Polymerisation).

Es wurde gefunden, dass insbesondere bei Einsatz von Divinylethylenharnstoff oder Divinylpropylenharnstoff in Kombination mit den bevorzugten hydrophil substituierten Alkylvinylethern, wie 1,3-Propandiolmonovinylether oder 1,4-Butandiolmonovinylether, eine (Normalphasen-) Suspensionspolymerisation durchgeführt werden kann. Das bietet den Vorteil eines sehr einfachen Herstellverfahrens für die erfindungsgemäßen Polymere, da man in einem einzigen Reaktionsschritt das hydrophile Polymer erhält, ohne die aufwendige inverse Suspensionspolymerisation durchzuführen.

Die Suspensionspolymerisation wird auf bekannte Weise durchgeführt.
Als Suspensionsmittel wird in der Normalphasen-Suspensionspolymerisation typischerweise Wasser verwendet.
Dem Suspensionsmittel können bekannterweise ein oder mehrere Stabilisatoren und/oder ein oder mehrere grenzflächenaktive Verbindungen zugesetzt werden.

Als Stabilisatoren können eine Vielzahl von wasserlöslichen makromolekularen Verbindungen oder auch feinverteilte anorganische Verbindungen eingesetzt werden.
Beispiele für makromolekulare Stabilisatoren sind Polyvinylpyrolidon, Polyacrylate, Polycarboxylate, Polyacrylamid, Polyvinylalkohol, Hydroxyalkylcellulose, Methylcellulose oder Polyethylenglykole.

Bevorzugt werden Polyvinylalkohole eingesetzt.

Als anorganische Verbindungen können z. B. Calciumphosphat oder Magnesiumhydroxyd als Stabilisatoren eingesetzt werden.
Weiterhin können der wässerigen Phase Puffersubstanzen wie z. B. Na₂HPO₄ und NaH₂PO₄ zugesetzt werden.

Geeignete grenzflächenaktive Verbindungen sind insbesondere anionische und nichtionische Tenside wie Ethoxylate langkettiger Alkohole, ethoxilierte Mono-, Di- und Trialkylphenole, Alkali- und Ammoniumsalze von C₁₂ - C₁₈ Alkylsulfonsäuren oder Arylsulfonsäuren.

Für die Durchführung der erfindungsgemäßen Polymerisation wird die organische Phase, auch Ölphase genannt, in der wässerigen Phase suspendiert. Die Ölphase enthält dabei in einer Ausführungsform neben den Monomeren inerte Lösungsmittel (Porogene), um die gewünschten Porengrößen einzustellen.

Geeignete organische Lösungsmittel (Porogene) sind z. B. aliphatische Kohlenwasserstoffe (C₆ - C₁₈), wie z. B. Hexan, Dodecan oder Benzingemische, cycloaliphatische Verbindungen wie Cyclohexan, aromatische Kohlenwasserstoffe wie Toluol, Ethylbenzole oder Xylole oder Alkohole wie aliphatische C₄ - C₁₂-Alkohole z. B. Heptanol, Dodecanol, Cyclohexanol, Polyethylenglykole oder Polypropylenglykole mit unterschiedlicher Molmasse oder Ester aliphatischer Carbonsäuren wie Butylacetat oder Propylpropionat oder Ester aromatischer Carbonsäuren wie Propylbenzoat oder Ester wie Butylglykolacetat oder Glycerintriacetat oder Ether wie Di-n-Butylether, Di-n-amylether, Diphenylether, Ethylenglykolmonophenylether und Ethylenglykoldiethylether.
Diese Lösungsmittel können entweder als Quell- oder Fällmittel für die Polymere wirken und auf diese Weise die Porosität beeinflussen.

Beispiele für Quellmittel bei den erfindungsgemäßen Polymeren sind niedere Alkohole, aliphatische Ester oder aromatische Kohlenwasserstoffe wie Toluol.
Beispiele für Fällmittel sind aliphatische Kohlenwasserstoffe wie Dodecan oder Benzingemische. Durch Art und Menge der Lösungsmittel in Verbindung mit dem Vernetzungsgrad des Polymeren kann die Porosität der Polymere festgelegt werden.

Weiterhin werden der organischen Phase typischerweise ein oder mehrere radikalisch wirkende Initiatoren zugefügt.
Beispiele für radikalische Initiatoren sind organische Peroxide, wie Di-tert-butylperoxid, Dibenzoylperoxid, Bis(o-methylbenzoyl)peroxid, tert.-Butylhydroperoxid, Cumolhydroperoxid, Di-iso-propylperoxiddicarbonat, Cyclohexanonperoxid, oder aliphatische Azoverbindungen wie α,α'-Azodiisobuttersäurenitril, Azobis-cyanvaleriansäure, 1,1'-Azo-cyklohexan-1,1'-dicarbonsäurenitril oder Azodicarbonamid. Bevorzugt ist α,α'-Azodiisobuttersäurenitril.
Auch mittels Strahlung, z. B. UV-Strahlung, aktivierbare Initiatoren können erfindungsgemäß als radikalische Initiatoren eingesetzt werden.

Die Phasenverhältnisse bei der Suspensionspolymerisation können typischerweise im Volumenverhältnis zwischen 1:20 (Ölphase zu wässriger Phase) und 2:1 variiert werden, bevorzugt sind Verhältnisse zwischen 1:5 und 1:1, besonders bevorzugt zwischen 1:3 und 1:1.

Das Verhältnis von organischem Lösungsmittel zu Monomer beträgt typischerweise zwischen 1:20 und 4:1, bevorzugt zwischen 1:5 und 3:1, besonders bevorzugt zwischen 1:1 und 2,5:1.

Die Konzentration des Initiators bezogen auf die Menge an Monomer beträgt typischerweise zwischen 0,01 (Gewichts)% und 10 (Gewichts)%, bevorzugt zwischen 0,1 und 7 (Gewichts)% und besonders bevorzugt zwischen 0,2 und 7 (Gewichts)%.

Die Konzentration von Stabilisatoren bezogen auf die Menge an Suspendiermittel, in der Regel Wasser, beträgt zwischen 0,01 und 3 (Gewichts)%, typischerweise zwischen 0,02 und 2 (Gewichts)%, besonders bevorzugt zwischen 0,05 und 0,5 (Gewichts)%.

Die Suspensionspolymerisation wird dann durchgeführt, indem die beiden Phasen unter starkem Rühren gemischt werden. Zusätzlich wird typischerweise für eine Dauer von 1 bis 20 Stunden auf 20 bis 100°C, bevorzugt 40 bis 100°C temperiert. Typischerweise wird über einen Zeitraum von 0,5 bis 5 Stunden auf 40 bis 100°C erhitzt und anschließend nochmals mehrere Stunden bei 70 bis 100°C nachpolymerisiert. Während der ganzen Zeit sollte gerührt werden. Diese Temperaturangaben beziehen sich auf ein System, in dem Wasser als Suspensionsmittel verwendet wird. Bei Einsatz anderer polarer Lösungsmittel anstelle von Wasser können je nach Siedepunkt des Lösungsmittels andere Temperaturbereiche möglich bzw. sinnvoll sein.

In der Regel ist es vorteilhaft, die erfindungsgemäße Polymerisation in Schutzgasatmosphäre durchzuführen.

Abschließend wird in der Regel auf Raumtemperatur abgekühlt, die organischen Lösungsmittel entfernt, sofern diese bei der Polymerisation zugesetzt wurden, und das Produkt in Wasser, einem wässrigen Puffer oder einem Gemisch von Wasser mit einem organischen Lösungsmittel wie Ethanol gelagert.

Falls erforderlich, kann das Polymer durch Siebung oder eine andere Art der Klassierung in die gewünschte Korngrößenverteilung gebracht werden.

Soll statt der Normalphasen-Suspensionspolymerisation eine inverse Suspensionspolymerisation oder eine Emulsionspolymerisation durchgeführt werden, so ist dem Fachmann bekannt, in welcher Weise die Zusammensetzung der Reaktionslösungen zu verändern ist.

Ebenso kann die erfindungsgemäße Polymerisation kontinuierlich erfolgen. Besonders bevorzugt werden dabei zur Partikelerzeugung statische Mischer, insbesondere Mikromischer oder Raupenmischer, eingesetzt. In diesen Mischern wird unter Ausnutzung der Strömungsenergie die räumliche Verteilung zweier zu mischender Komponenten durch die Strömungsführung, z.B. durch Trennen und Wiedervereinigen, Verdrehen, Verzerren und Aufweiten so beeinflusst, dass große Grenzflächen für den diffusiven Austausch zwischen den Komponenten entstehen und durch die hohen Scherkräfte eine besonders einheitliche Korngrößenverteilung erzielt werden kann. Verschiedene Mischer und ihr Aufbau sind bekannt. Beispielsweise sind solche Systeme beschrieben in EP 1177243.

Zur Durchführung der Reaktionen wird z. B. der Mikromischer mit der wässrigen Phase kontinuierlich mit definiertem Volumenstrom durchströmt. Anschließend wird die Ölphase über die zweite Zuführung, ebenfalls mit definiertem, genau eingestelltem Volumenstrom eingespeist. Das Verhältnis der beiden Volumenströme kann in einem breiten Bereich liegen und richtet sich nach der gewünschten Teilchengröße, der Art und Verteilung der Teilchengrößen, der Viskosität der wässrigen und der Ölphase abhängig von der Reaktionstemperatur sowie der Reaktionskinetik und dem notwendigen Verhältnis der Porogene in der Endmischung zur Erzielung einer geeigneten Porenstruktur. Vorzugsweise liegt das Volumenstromverhältnis zwischen wässriger Phase und Ölphase bei 1:10 bis 100:1, insbesondere bei 2:1 bis 20:1. Bevorzugt wird die aus dem statischen Mischer austretende Suspension in einem kontinuierlich arbeitenden Reaktor polymerisiert.

Ebenso ist es möglich, die oben beschriebene Vorgehensweise umzukehren. Beispielsweise zur Polymerisation von besonders hydrophilen Monomeren werden diese über die wässrige Phase zugeführt. Nähere Einzelheiten zur Synthese von Perlpolymerisaten mithilfe von Mikromischern finden sich in EP 1177243.

Dem Fachmann ist weiterhin bekannt, wie unter anderem durch die Art und Menge des Zusatzes an Suspensionsstabilisatoren und grenzflächenaktiven Verbindungen sowie die Rührintensität Einfluss auf die Partikelgröße des entstehenden Polymers genommen werden kann. In der Regel können mittels Suspensionspolymerisation je nach Art des Rührwerks und der Drehzahl Partikeldurchmesser zwischen 3 µm und 500 µm, bevorzugt zwischen 3 µm und 300 µm erzeugt werden. Die Partikel können unregelmässig geformt oder bevorzugt sphärisch sein.

Werden die erfindungsgemäßen Polymere mittels Emulsionspolymerisation hergestellt, so können z.B. Partikeldurchmesser zwischen 20 nm und 3000 nm, bevorzugt zwischen 100 und 500 nm erzeugt werden.

Die erfindungsgemäßen Polymere liegen bevorzugt als unporöse oder bevorzugt poröse Partikel vor. Die Porengrößen können je nach Art und Menge des eingesetzten porogenen Lösungsmittels zwischen 2 und 300 nm liegen. Bevorzugt sind Porengrößen zwischen 2 und 200 nm.

Genauso können die Polymere auch in Form von Membranen, Fasern, Hohlfasern, Beschichtung oder als monolithischer Formkörper vorliegen. Monolithische Formkörper sind dreidimensionale Körper, z.B. in zylindrischer Form. Bevorzugt haben diese Formkörper eine mono- oder bimodale Porenstruktur.
Gleichermassen können die erfindungsgemäßen Polymere als Kompositmaterialien eingesetzt werden, d.h. beispielsweise als Beschichtung z.B. anorganischer Partikel oder Formkörper, oder im Gemisch mit z.B. anorganischen Bestandteilen. Ein Beispiel hierfür sind Partikel aus dem erfindungsgemäßen Polymer, die durch Einpolymerisierung magnetisierbarer Teilchen oder eines magnetisierbaren Kerns selbst magnetisierbar sind.

Die erfindungsgemäßen hydrophilen, quervernetzten Polymere eignen sich insbesondere als Sorbenzien in der Chromatographie, als Trägermaterialien zur Immobilisierung von biologisch und/oder katalytisch wirksamen Stoffen oder als Trägermaterialien für Festphasensynthesen von z.B. Biopolymeren wie Nukleinsäuren oder Peptiden oder für die kombinatorische Chemie.

Die erfindungsgemäßen Materialien zeichnen sich durch eine gute Hydrolysestabilität, insbesondere in basischem Medium, aus sowie durch eine gute Druck-Fluß-Stabilität. Weiterhin sind sie aufgrund ihrer großen Hydrophilie insbesondere für biochromatographische Verfahren geeignet. In den Beispielen finden sich zusätzlich experimentelle Daten zu diesen Eigenschaften.

Besonders geeignet sind die erfindungsgemäßen Polymere als Sorbenzien. Zu diesem Zweck werden sie in bekannter Weise in Chromatographiesäulen oder Kapillaren gefüllt. Genauso kann das erfindungsgemäße Polymer für chromatographische oder andere Zwecke in Kartuschen gepackt werden. Gegenstand der vorliegenden Erfindung sind daher auch Chromatographiesäulen, Kapillaren oder Kartuschen, die ein erfindungsgemäßes Polymer als Sorbens oder Trägermaterial enthalten.

Die erfindungsgemäßen Polymere können in ihrer nativen Form, d.h. ohne weitere Derivatisierungsschritte eingesetzt werden oder durch einen oder mehrere Derivatisierungsschritte mit anderen oder zusätzlichen Funktionalitäten versehen werden. Insbesondere können sie mit Separationseffektoren derivatisiert werden.

Die kovalente Anbindung der Separationseffektoren erfolgt in der Regel über die auf dem Polymer vorhandenen funktionellen Gruppen, wie z.B. Hydroxylgruppen, z.B. unter Ausbildung einer Ester- oder bevorzugt einer Ether-Funktion, direkt oder über einen Linker bzw. Abstandshalter. In einer anderen bevorzugten Ausführungsform erfolgt die Verknüpfung mit dem Basismaterial über eine Cer(IV)-katalysierte Pfropfpolymerisation unter Ausbildung einer C-C-Verknüpfung mit dem Basismaterial.

Separationseffektoren sind dem Fachmann auf dem Gebiet der Chromatographie bekannt. Separationseffektoren sind Substituenten, die bereits während der Synthese des Basismaterials oder nachträglich in das Trägermaterial eingeführt werden können und die Einfluss auf die Oberflächeneigenschaften des Trägermaterials nehmen. Insbesondere werden durch die gezielte Derivatisierung von Trägermaterialien mit Separationseffektoren Trägermaterialien mit bestimmten chromatographischen Eigenschaften erzeugt. Insbesondere können Separationseffektoren folgende endständige Gruppen aufweisen:
a) eine ionische oder ionisierbare Gruppe, z.B.
   -NR⁷R⁸ oder -N+R⁷R⁸R⁹,
   worin
   - R⁷und R⁸: unabhängig voneinander
   H, Alkyl mit 1-5 C-Atomen
   und
   - R⁹: Alkyl mit 1-5 C-Atomen
   mit der Maßgabe, dass wenn X = -N+R⁷R⁸R⁹, R⁷ und R⁸ nicht H sein
   können,
   - Guanidinium
   - SO₃⁻
   - Carbonsäuren
b) eine hydrophobe Gruppierung, z.B. -OR¹⁰ oder -NHR¹⁰, wobei R¹⁰ C₁-C₂₀-Alkyl, C₆-C₂₅-Aryl, C₇-C₂₅-Alkylaryl oder C₇-C₂₅-Arylalkyl bedeuten, und wobei diese Reste auch mit Nitril oder C₁-C₅-Alkoxy derivatisiert sein können, und wobei auch eine oder mehrere nicht benachbarte CH₂-Gruppen durch NH oder O oder auch eine oder mehrere CH Gruppen durch N ersetzt sein können;
c) eine Metallchelat-Gruppierung;
d) ein thiophiler Rest;
e) ein chiraler Rest.
f) Biomoleküle, wie Proteine (z.B. Antikörper), Peptide, Aminosäuren, Nukleinsäuren, Saccharide, Biotin etc.

Thiophile Reste sind beispielsweise in EP 0 165 912 offenbart.

Soll das Polymer zunächst mit einem universellen Linker versehen werden, kann es z.B. zur Einführung von Epoxy-Gruppen mit Glycidylverbindungen wie Butandioldiglycidylether umgesetzt werden.

Weiterhin kann das erfindungsgemäße Polymer als Basismaterial durch Pfropfpolymerisation mit tentakelartigen Strukturen versehen werden, die wiederum die entsprechenden Separationseffektoren tragen oder mit diesen funktionalisiert werden können. Bevorzugt wird die Pfropfung gemäß EP 0 337 144 durchgeführt. Die erzeugte Kette ist linear und über eine Monomereinheit mit dem Basismaterial verknüpft. Dazu wird das erfindungsgemäße Basismaterial in einer Lösung von Monomeren suspendiert, vorzugweise in einer wäßrigen Lösung. Das Aufpfropfen des polymeren Materials wird im Zuge einer üblichen Redoxpolymerisation unter Sauerstoffausschluß bewirkt. Als Polymerisations-Katalysator werden Cer(IV)-Ionen eingesetzt, da dieser Katalysator an der Oberfläche des Basismaterials Radikalstellen bildet, von welchen die Pfropfpolymerisation der Monomere gestartet wird.
Die Polymerisation wird durch Abbruchsreaktionen unter Beteilung der Cer-Salze beendet. Deswegen ist die (mittlere) Kettenlänge durch die Konzentrationsverhältnisse des Basismaterials, des Initiators und der Monomeren beeinflussbar. Weiterhin können einheitliche Monomere oder auch Gemische verschiedener Monomere eingesetzt werden; im letzteren Fall entstehen gepfropfte Copolymerisate.

Geeignete Monomere zur Herstellung der Pfropfpolymerisate sind Monomere entsprechend Formel V oder VI.

CR*R**=CR¹¹-Y (Formel V)

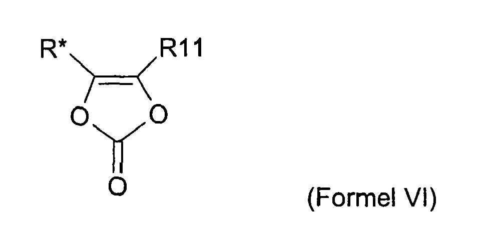

Diese Monomeren stellen (Meth) Acrylsäure (Y = -COOH), (Meth)Acrylsäurederivate mit
Y= 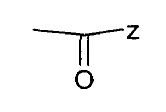 Allylamine (Y = -CH₂ NH₂, -CH₂NR¹²R¹³), (Meth)Acrylnitrile (Y = -CN), Acroleine (Y = -CHO), Vinylcarboxylate (Y = -OCOCHR¹⁵R¹⁶) oder Vinylencarbonate der Formel VI dar.
Alle diese Monomere stellen in wässriger Lösung radikalisch polymerisierbare Substanzen mit reversibel bindenden Gruppen dar, die neutral, sauer oder basisch sein können.
Werden als Monomere Vinylencarbonate der Formel VI oder Vinylcarboxylate CR*R** = CR¹¹-OCOCHR¹⁵R¹⁶ der Formel V eingesetzt, so wird vorzugsweise das erhaltene Produkt anschließend in ein Trennmaterial mit Hydroxylgruppen überführt. Diese Überführung in eine Hydroxyl-Phase wird durch eine an sich bekannte milde alkalische oder saure Verseifung erreicht. Beispielsweise kann die Reaktion mit methanolischer K₂CO₃-Lösung bei Raumtemperatur, beschrieben z.B. von Y. Tezuka et al., in Macromol. Chem. 186, 685-694 (1985), durchgeführt werden.
In den Formeln V und VI bedeutet R¹¹ vorzugsweise H, d.h. die Acrylsäurederivate sind bevorzugt.
Y in Formel V bedeutet vorzugsweise 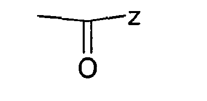 ,-COCHR¹⁵R¹⁶ oder ―CH₂NH₂, in zweiter Linie bevorzugt
-CN oder -CHO.
R¹⁵ und R¹⁶ bedeuten unabhängig voneinander H oder eine Alkylgruppe mit bis zu 5 C-Atomen. Vorzugsweise ist mindestens einer der Reste R¹⁵ und R¹⁶ H. Folgende Reste sind besonders bevorzugt: Acetyloxy-, Propionyloxy-, Butyryloxy-, Valeryloxy- und Hexanoyloxy-Rest.
Z bedeutet in Formel V ―OR¹⁴, -OH oder -NR¹²R¹³, vorzugsweise -NR¹²R¹³. Bevorzugt sind dabei Verbindungen, in denen Z - NR¹²R¹³ bedeutet und einer der Reste R¹² und R¹³ H ist.
Die Reste R¹² und/oder R¹³ bedeuten bevorzugt eine Alkyl-, Phenyl-, Phenylalkyl- oder Alkylphenylgruppe, wobei die Alkyl- und/oder die Phenylgruppe ein- oder mehrfach, vorzugsweise ein- oder zweifach, insbesondere bevorzugt einfach, substituiert sein kann durch einen Alkoxy-, Cyano-, Amino-, Mono- oder Dialkylamino-, Trialkylammonium- , Carboxyl-, Sulfonsäure-, Acetoxy- oder Acetamino-Rest.
Die Reste R¹² und/oder R¹³ bedeuten bevorzugt Alkyl, Alkoxyalkyl, Cyanoalkyl, Aminoalkyl, Mono- oder Dialkylaminoalkyl, Trialkylammoniumalkyl, Carboxyalkyl oder Sulfonsäurealkyl mit bis zu 10 C-Atomen, bevorzugt bis zu 6 C-Atomen, insbesondere bevorzugt bis zu 4 C-Atomen in der Alkylgruppe, die linear oder verzweigt sein kann. R¹² und/oder R¹³ bedeuten demnach bevorzugt Methyl, Ethyl, Propyl, Butyl, Pentyl, Hexyl, Methoxymethyl, Ethoxymethyl, 2-Methoxyethyl, 2-, 3- oder 4-Oxapentyl, 2-, 3-, 4- oder 5-Oxahexyl, 2-, 3-, 4-, 5- oder 6-Oxaheptyl, Isopropyl, 2- Butyl, Isobutyl, 2-Methylbutyl, Isopentyl, 2-Methylpentyl, 3-Methylpentyl, 2-Oxa-3-methylbutyl, 3-Oxa-4-methylbutyl, 2-Methyl-3-oxapentyl, 2-Methyl- 3-oxahexyl, ferner auch Heptyl, Octyl, Nonyl oder Decyl.
Ferner bevorzugt sind auch Alkylgruppen, die durch eine Cyano, Carboxy- oder Sulfonsäuregruppe substituiert vorliegen. Demnach bedeuten R¹² und/oder R¹³ bevorzugt Cyanomethyl, Cyanoethyl, Cyanopropyl, Cyanobutyl, Cyanopentyl, Cyanohexyl, 2-Cyanopropyl, 2- Cyanobutyl, Carboxylmethyl, Carboxylethyl, Carboxylpropyl, Carboxylisopropyl, Carboxylbutyl, Carboxylpentyl, Carboxylhexyl, Carboxyl- 2-methylpropyl, Carboxyl-2-methylbutyl, Sulfonsäuremethyl, Sulfonsäureethyl, Sulfonsäurepropyl, Sulfonsäurebutyl, Sulfonsäurepentyl, Sulfonsäurehexyl, Sulfonsäure-2-methylpropyl, Sulfonsäure-2-methylbutyl, Sulfonsäure-3-methylbutyl, Sulfonsäure-2-methylpentyl, Sulfonsäure-3- methylhexyl oder Sulfonsäure-2-ethylpentyl.
Ferner sind die Alkylgruppen bevorzugt einfach substituiert durch eine Amino-, Mono- oder Dialkylamino- oder Trialkylammoniumgruppe. Die Alkylgruppen können dabei gleich oder verschieden sein und bis zu 10, vorzugsweise bis zu 6 C- Atomen, insbesondere bevorzugt bis zu 4 C-Atomen, besitzen und bedeuten demnach vorzugsweise Dimethylaminoethyl, Diethylaminoethyl, Methylaminoethyl, Methylaminopropyl, Dimethylaminopropyl, Ethylaminoethyl, Propylaminoethyl, Propylaminopropyl, Dipropylaminoethyl, Dipropylaminobutyl, Diethylaminoethyl, Trimethylammoniumethyl, Trimethylammoniumpropyl,
Trimethylammoniumbutyl, Triethylammoniumethyl, Triethylammoniumpropyl, Triethylammoniumethyl, Aminoethyl, Aminopropyl, Aminobutyl oder Aminopentyl. Alle diese Alkyl- und substituierte Alkylgruppen sind ebenfalls bevorzugt als Substituenten an der Phenylgruppe.

Bevorzugt für R¹² und/oder R¹³ ist auch ein Sulfonsulfid der Struktur - (CH₂)ₙ-SO₂-(CH₂)-S-(CH₂)ₙOH mit n = 2, 3, 4, 5 oder 6, vorzugsweise 2,3 oder 4.
Vorzugsweise hat R¹² und/oder R¹³ auch die Bedeutung einer Phenylgruppe, die vorzugsweise einfach substituiert ist durch Cyano, Cyanoalkyl, Amino, Aminoalkyl, Mono- oder Dialkylamino, Alkyl, Alkoxy, Alkoxyalkyl, Mono- oder Dialkylaminoalkyl, Trialkylammonium- oder Trialkylammoniumalkyl, Carboxy, Carboxyalkyl, Sulfonsäure oder Sulfonsäurealkyl. Die bevorzugten Bedeutungen dieser Substituenten entsprechen den vorstehend angegebenen bevorzugten Alkylgruppen und substituierten Alkylgruppen. Der Substituent an der Phenylgruppe sitzt vorzugsweise in p-Stellung.
p-Acetoxyphenyl, p-Aminophenyl oder p- Acetaminophenyl sind ebenfalls bevorzugte Bedeutungen für R¹² und/oder R¹³.
Bevorzugt für R¹² und/oder R¹³ ist ferner eine Alkylphenyl- oder Phenylalkylgruppe, wobei ebenfalls die angegebenen bevorzugten Bedeutungen für die Alkyl-, substituierten Alkyl- oder substituierten Phenylgruppen gelten sollen.
Demnach gelten folgende substituierte Phenylgruppen beispielsweise als besonders bevorzugt: 4-Cyanophenyl, 4- Alkylphenyl, 4- (N,N-Dimethylamino)-phenyl, 4-(N,N-Dialkylaminoethyl)- phenyl, 4-Ethoxyphenyl, 4-Ethoxyethylphenyl, 4- Trialkylammoniumphenyl, 4- Carboxylphenyl, 4-Sulfonsäurephenyl, Phenylethyl, 4-(N-Ethylamino) phenylpropyl oder 4-Cyanophenyl-ethyl.
Des weiteren sind Monomere der Formel V bevorzugt, in denen R¹² und/oder R¹³ einen cyclischen oder bicyclischen Rest, der aromatisch oder gesättigt sein kann, mit 5-10 C- Atomen, worin ein- oder mehrere CH- oder CH₂- Gruppen durch N oder NH, N oder NH und S, oder N oder NH und O ersetzt sind, bedeuten.
R¹² und/oder R¹³ bedeuten demnach bevorzugt auch einen Pyridinrest, Imidazolylrest, Indolylrest, ferner bevorzugt einen Pyrrol-, Pyrimidin-, Pyrazin-, Chinolin- oder Isochinolinrest.

R¹² und/oder R¹³ können beispielsweise auch einen Thiazol-, Thiadiazol-, Morpholin-, Triazin-, Piperazin-, Benzothiazol-, Purin-, Pyrazol-, Triazol-, Pyrrolidin- oder Isoxazol-Rest bedeuten.
Insbesondere bevorzugt sind dabei die aromatischen, heterocyclischen Reste.
Die Reste R¹² und R¹³ müssen, um zu geeigneten Austauschern zu gelangen, so aufeinander abgestimmt werden, dass entweder beide Reste eine saure oder basische Gruppe enthalten oder aber einer der Reste neutral ist. Dem Fachmann bereitet es keine Schwierigkeit, die Gruppen entsprechend zuzuordnen und somit geeignete Reste für R¹² und R¹³ zusammenzustellen, je nach Funktion und Aufgabe des gewünschten Ionenaustauschers.
Vorzugsweise ist einer der beiden Reste R¹² und R¹³ ein neutraler Rest.

R¹⁴ bedeutet bevorzugt Alkyl, Alkoxyalkyl, Cyanoalkyl, Carboxyalkyl oder Sulfonsäurealkyl mit bis zu 10 C-Atomen, vorzugsweise mit bis zu 6 C-Atomen, insbesondere bevorzugt mit bis zu 4 C- Atomen in der Alkylgruppe, die linear oder verzweigt sein kann. R¹⁴ bedeutet demnach bevorzugt Methyl, Ethyl, Propyl, Butyl, Pentyl, Hexyl, Methoxymethyl, Ethoxymethyl, 2-Methoxyethyl, 2-, 3- oder 4- Oxapentyl, Isopropyl, 2-Butyl, Isobutyl, 2-Methylbutyl, Isopentyl, 2- Methylpentyl, 3-Methylpentyl, 2-Oxa-3-methylbutyl, 3-Oxa-4-methylbutyl, 2- Methyl-3- oxapentyl oder 2-Methyl-3-oxahexyl.
Ferner bevorzugt sind auch Alkylgruppen, die durch eine Cyano, Carboxy- oder Sulfonsäuregruppe substituiert vorliegen. Demnach bedeutet R¹⁴ bevorzugt Cyanomethyl, Cyanoethyl, Cyanopropyl, Cyanobutyl, Cyanopentyl, Cyanohexyl, 2-Cyanopropyl, 2-Cyanobutyl, Carboxylmethyl, Carboxylethyl, Carboxylpropyl, Carboxylisopropyl, Carboxylbutyl, Carboxylpentyl, Carboxylhexyl, Carboxyl-2-methylpropyl, Carboxyl-2-methylbutyl, Sulfonsäuremethyl, Sulfonsäureethyl, Sulfonsäurepropyl, Sulfonsäurebutyl, Sulfonsäurepentyl, Sulfonsäurehexyl, Sulfonsäure-2-methylpropyl, Sulfonsäure-2-methylbutyl, Sulfonsäure-3- methylbutyl, Sulfonsäure-2- methylpentyl, Sulfonsäure-3-methylhexyl oder Sulfonsäure-2-ethylpentyl.
Alle diese Alkyl- und substituierten Alkylgruppen sind ebenfalls bevorzugt als Substituenten an der Phenylgruppe.
Vorzugsweise hat R¹⁴ auch die Bedeutung einer Phenylgruppe, die vorzugsweise einfach substituiert ist durch Cyano, Cyanoalkyl, Alkyl, Alkoxy, Alkoxyalkyl, Carboxy, Carboxyalkyl, Sulfonsäure oder Sulfonsäurealkyl. Die bevorzugten Bedeutungen dieser Substituenten entsprechen den vorstehend angegebenen bevorzugten Alkylgruppen und substituierten Alkylgruppen. Der Substituent an der Phenylgruppe sitzt vorzugsweise in p-Stellung.
R* und R** in den Monomeren der Formel V bedeuten vorzugsweise H.

R* und R¹¹ in Formel VI bedeuten vorzugsweise H.

Typischerweise werden Ketten auf das Basismaterial aufgepfropft, die zwischen 2 und 100, vorzugsweise 5 und 60, insbesondere zwischen 10 und 30 Monomereinheiten aufweisen.

Wie schon vorab erwähnt, gibt es Sorbenzien, bei denen ausschließlich ein Typ von Separationseffektor in der Grundmatrix vorliegt, und CoPolymerisate oder "mixed-mode" Sorbenzien, bei denen mindestens zwei verschiedene Typen von Separationseffektoren im Sorbens vorliegen. "single mode" Sorbentien trennen die gelösten Stoffe (Solute) auf Grundlage einer Art von Wechselwirkung zwischen Separationseffektor und Solute. Bei der Anwendung von mixed mode Sorbenzien beruht die Trennung der gelösten Stoffe (Solute) auf verschiedenen Arten von Wechselwirkungen zwischen Separationseffektor und Solute. Derartige chromatographische Verfahren sind als mixed mode Chromatographie bekannt. Im einfachsten Fall nutzt man beispielsweise die Hydrophobie der Grundmatrix aus, um durch Einführung eines ionischen Separationseffektors ein für die mixed-mode Chromatographie geeignetes Sorbens bereitzustellen. Auch durch Umsetzung einer Grundmatrix mit zwei verschiedenen Reaktanden, von denen einer beispielsweise eine hydrophobe Gruppe, der andere eine ionische Gruppe in die Grundmatrix einführt, sind mixed-mode Sorbentien zugänglich. Der Nachteil beider Vorgehensweisen besteht darin, dass die sterische Beziehung zwischen den verschiedenen Typen von Separationseffektoren nicht definiert sind. Dieser Nachteil wird bei mixed-mode Sorbentien vermieden, bei denen die verschiedenen Separationseffektoren in einem Liganden kombiniert sind. Dieser Ligand ist an die Grundmatrix gebunden.
Beide vorgenannten Typen von mixed-mode Sorbentien sind von L.W. McLaughlin (1989) in Chem.Rev. 89, 309 - 319 in einem Übersichtsartikel beschrieben. Ein mixed-mode Sorbens, dessen verschiedene Separationseffektoren in einem einheitlichen Liganden gebunden vorliegen, kann aus einem mit Chlorpropylgruppen substituierten Trägermaterial durch Überführung der Chlorderivate in Bromderivate und anschließender Umsetzung mit Benzyldimethylamin bereitgestellt werden: Der Ligand ist über eine C3-Kette an die Grundmatrix gebunden. Daran schließt sich eine dimethylsubstituierte Ammoniumgruppierung an, an die ein lipophiler Benzylrest gebunden ist. Eine umgekehrte Anordnung von hydrophoben und ionischen Separationseffektoren in einem Liganden ist durch Umsetzung von mit Aminopropylgruppen substituierten Trägermaterial mit p-Diethylaminobenzoesäure erhältlich: Bei diesem Liganden ist die tertiäre Aminogruppe distal von der Grundmatrix orientiert, während bei der erstgenannten Variante die hydrophobe Benzylgruppe distal angeordnet ist.
Weitere Ausführungsformen derartiger Liganden mit zwei Separationseffektoren sind in folgenden Druckschriften offenbart: WO 96/09116, WO 97/29825, WO 00/69872 und WO01/38228. In der Patentanmeldung EP 04028798.9 werden komplexere Liganden mit mehr als je einem Separationseffektor, sowie Anionenaustauschgruppen, deren Stickstoff als Azaderivat von Mehrringstrukturen, beispielsweise dem Chininuklidinsystem, vorliegt, offenbart. Beispiele hierfür sind:

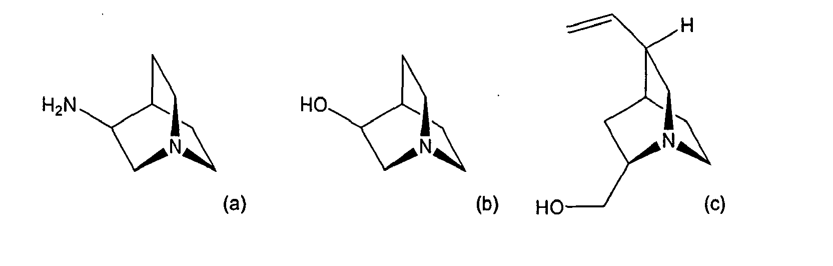

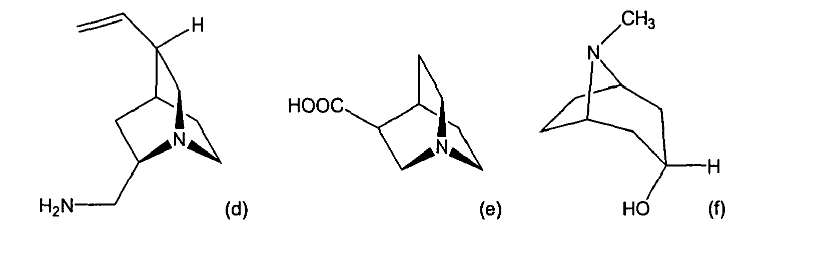

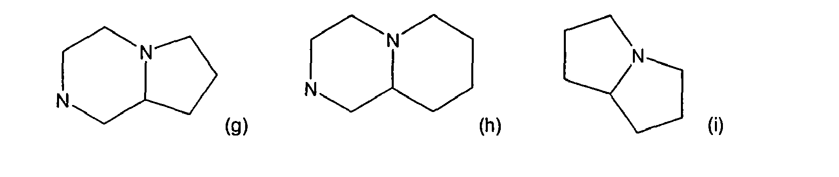

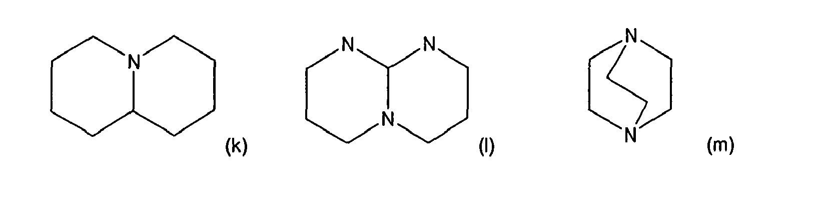

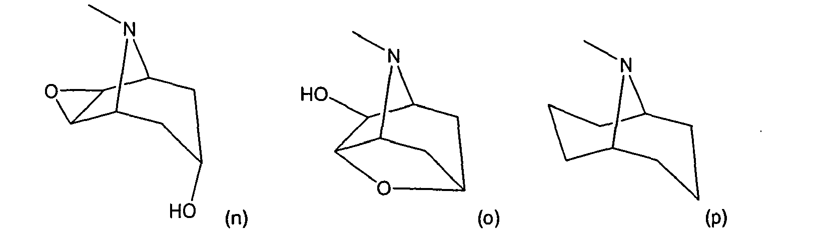

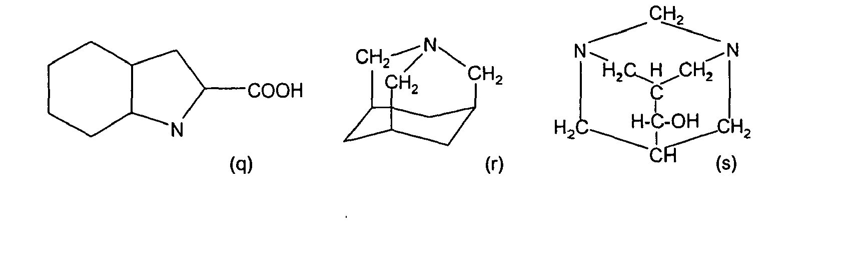

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

Die vollständige Offenbarung aller vor- und nachstehend aufgeführten Anmeldungen, Patente und Veröffentlichungen ist durch Bezugnahme in diese Anmeldung eingeführt.

### Beispiele

### 1. Herstellung eines Copolymerisats aus Butandiolmonovinylether und Divinylethylenharnstoff

In einem Doppelmantelreaktor werden 1050 ml entionisiertes Wasser (VE Wasser) vorgelegt und darin 0,32 g Tributylphosphat, 4,2 g Natriumsulfat, 0,01 g Natriumlaurylsulfonat und 2,1 g Polyvinylalkohol als Stabilisator gelöst. Die organische Phase, bestehend aus 96,25 g Butandiolmonovinylether, 78,45 g Divinylethylenharnstoff, 175 g Dodecanol und 4,2 g α,α'-Azo-diisobuttersäurenitril wird nach Mischung und Lösung der Bestandteile bei Raumtemperatur zur wässerigen Phase unter Rühren hinzugefügt. Die Suspension wird kräftig gerührt und anschließend auf 70°C erwärmt. Nach ca. 2 Stunden wird für 4 Stunden bei 80°C nachpolymerisiert. Nach Abkühlen auf Raumtemperatur wird das Polymer abgenutscht, das Porogen mit Wasserdampfdestillation entfernt und das Produkt in 20% ethanolischer Lösung gelagert.
Es werden 130 g Polymer, bezogen auf Trockenmasse erhalten. Die durchschnittliche Korngröße beträgt 80 µm.

### Charakterisierung der porösen Struktur:

Spezifische Oberfläche (BET): 322 m²/g

Das Quellvolumen des Reaktionsproduktes beträgt 4,3 ml/g.

### 2. Bestimmung des Retentionsverhaltens von Proteinen (Unspezifische Bindung)

Die Bestimmung des Retentionsverhalten von Proteinen als Funktion der Salzkonzentration wird eingesetzt, um das Proteinbindungsverhalten des unmodifizierten Trägermaterials zu untersuchen. Da Proteine auf dem unmodifizierten Trägermaterial nur unspezifisch binden, ist es vorteilhaft, wenn möglichst wenig Hintergrundbindung auftritt.

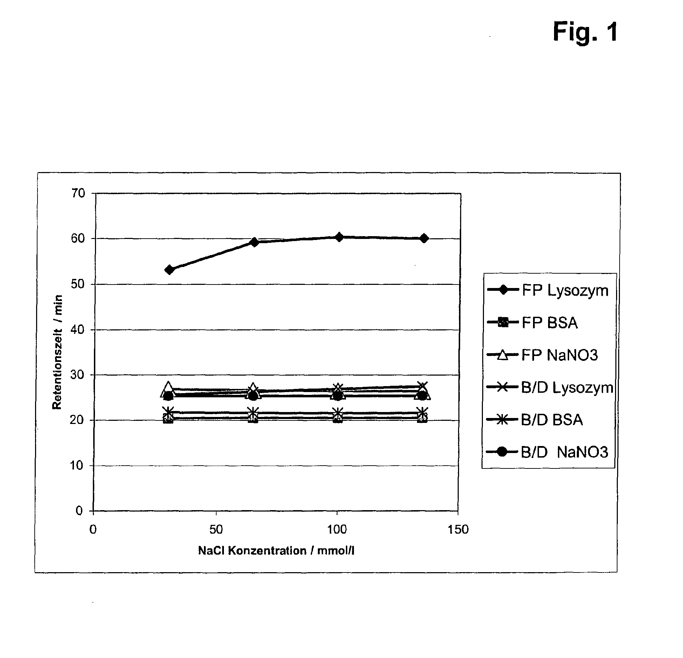

Das Bindungsverhalten des erfindungsgemäßen Materials (hergestellt entsprechend Beispiel 1) wird im Vergleich zu dem unmodifizierten Copolymer aus 1,2,-Dihydroxy-3-allylaxy-propan und Methylenbisacrylamid, kommerziell erhältlich unter dem Namen FractoPrep® (Merck KGaA, Deutschland), dargestellt. Abbildung 1 zeigt das Bindungsverhalten der Proteine Lysozym und Rinderserumalbumin sowie von NaNO₃. Die Abkürzung FP steht für FractoPrep®, B/D steht für das erfindungsgemäße Copolymer aus Butandiolmonovinylether und Divinylethylenharnstoff. Die Wiederfindung der gemessenen Proteine, angegeben als Quotient aus der photometrisch bestimmten Menge an von der Säule unter den Laufbedingungen eluierten Protein zu dem auf die Säule aufgegebenen Protein, ist unter allen Versuchsbedingungen größer 99 %.

### 3. Größenausschlußchromatographie auf dem erfindungsgemäßen Polymer

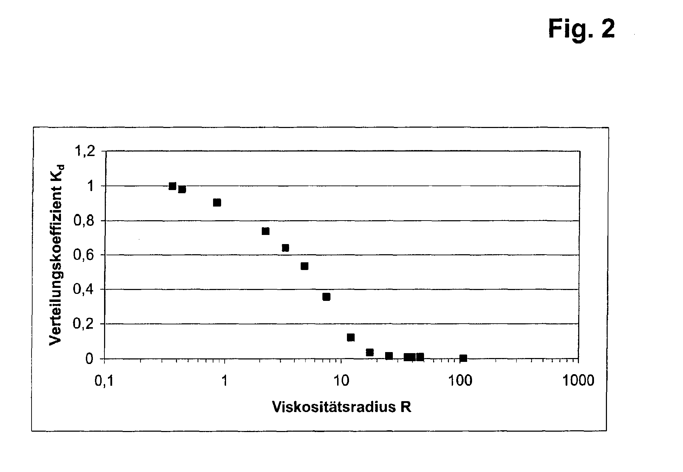

Eine beispielhafte Porenstruktur des erfindungsgemäßen Polymers ist durch die experimentell bestimmten Verteilungskoeffizienten Kd von Dextranen mit unterschiedlichen Molekulargewichten, ausgedrückt durch den Viskositätsradius der Dextrane, beispielhaft in Abbildung 2 gezeigt.

### 4. Basenstabilitätsuntersuchungen

Das entsprechend Beispiel 1 hergestellte erfindungsgemäße Material wird bei Raumtemperatur in 0,5 M NaOH gelagert (Volumenverhältnis NaOH:
Polymergel = 4:1).
Nach bestimmten Zeiten wird das Trennverhalten des Polymers anhand des Retentionsverhaltens bei der Trennung verschiedener Pullulane (Firma PSS, Mainz, Deutschland) als Markerverbindungen getestet.
Eluent: 100 mM NaCl, 20 mM NaH₂PO₄, pH 7,2
Säule: 300x10 mm, Fluß: 0,8 ml/min, Brechungsindexdetektor.

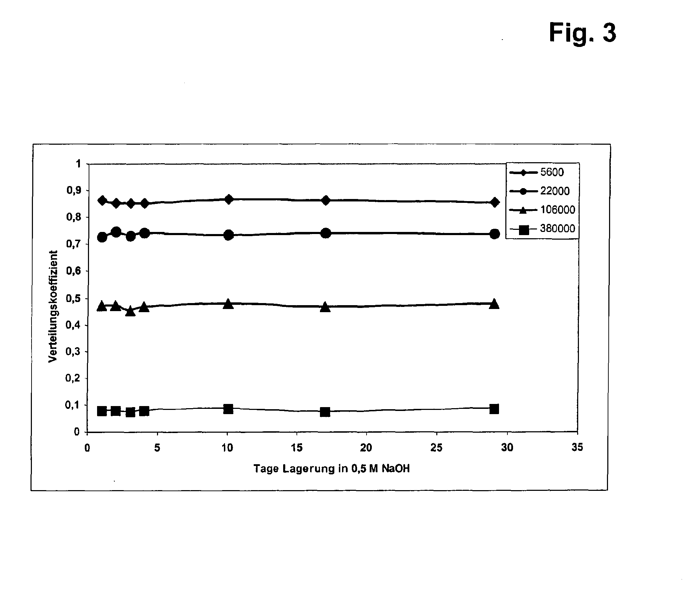

Abbildung 3 zeigt die Ergebnisse. Es ist klar zu erkennen, dass die Lagerung in verdünnter Natronlauge keinerlei Auswirkung auf den Verteilungskoeffizienten hat.

## Patentansprüche

1. Hydrophiles vernetztes Polymer auf Basis eines Copolymers zumindest aus
b) mindestens einem hydrophil substituierten Alkylvinylether der Formel I 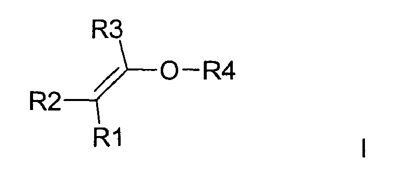 wobei R1, R2, R3 unabhängig voneinander H oder C1 bis C6 Alkyl sein können
und R4 ein Rest ist, der zumindest eine Hydroxylgruppe trägt und
b) mindestens einem Vernetzer entsprechend Formel II und/oder III und/oder IV, mit 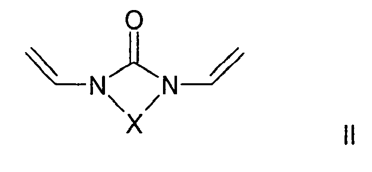 wobei X ein zweiwertiger Alkylrest mit 2 bis 5 C-Atomen ist, bei dem ein oder mehrere nicht benachbarte und nicht in direkter Nachbarschaft von N befindliche Methylengruppen durch O, C=O, S, S=O, S02, NH, NOH oder N ersetzt sein können und ein oder mehrere H-Atome der Methylengruppen unabhängig voneinander durch Hydroxylgruppen, C1-C6-Alkyl, Halogen, NH₂, C5-C10-Aryl, NH-(C1-C8)-Alkyl, N-(C1-C8)-Alkyl_{2,} C1-C6-Alkoxy oder C1-C6-Alkyl-OH substituiert sein können, und 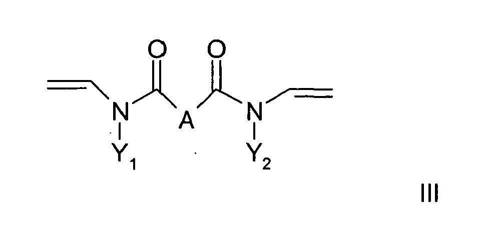 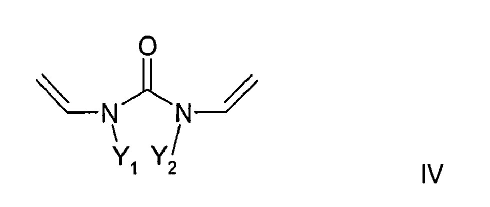 wobei Y1 und Y2 in Formel III und IV unabhängig voneinander
C1 bis C10 Alkyl oder Cycloalkyl sind, wobei ein oder mehrere nicht benachbarte Methylengruppen oder nicht in direkter Nachbarschaft von N befindliche Methylengruppen durch O, C=O, S, S=O, SO₂, NH, NOH oder N ersetzt sein können und ein oder mehrere H-Atome der Methylengruppen unabhängig voneinander durch Hydroxygruppen, C1-C6-Alkyl, Halogen, NH₂, C5-C10-Aryl, NH(C1-C8)Alkyl, N(C1-C8)Alkyl₂, C1-C6-Alkoxy oder C1-C6-Alkyl-OH substituiert sein können,
oder C6 bis C18 Aryl sind, wobei ein oder mehrere H-Atome in dem Arylsystem unabhängig voneinander durch Hydroxygruppen, C1-C6-Alkyl, Halogen, NH₂, NH(C1-C8)Alkyl, N(C1-C8)Alkyl₂, C1-C6-Alkoxy oder C1-C6-Alkyl-OH substituiert sein können und
*A* ein zweiwertiger Alkylrest mit 2 bis 5 C-Atomen ist, bei dem ein oder mehrere nicht benachbarte Methylengruppen oder nicht in direkter Nachbarschaft von N befindliche Methylengruppen durch O, C=O, S, S=O, SO₂, NH, NOH oder N ersetzt sein können und ein oder mehrere H der Methylengruppen unabhängig voneinander durch Hydroxygruppen, C1-C6-Alkyl, Halogen, NH₂, C5-C10-Aryl, NH(C1-C8)Alkyl, N(C1-C8)Alkyl₂, C1-C6-Alkoxy oder C1-C6-Alkyl-OH substituiert sein können.

2. Hydrophiles vernetztes Polymer entsprechend Anspruch 1, **dadurch gekennzeichnet**, das R4 in Formel I
ein geradkettiger oder verzweigter C1 bis C10 Alkylrest ist, bei dem ein oder mehrere nicht benachbarte Methylengruppen durch O, C=O, S, S=O, SO₂, NH, NOH, N ersetzt sein können und/oder bei dem ein oder mehrere H-Atome unabhängig voneinander durch C1-C6-Alkyl, C5-C10-Aryl, Halogen, NH₂, NH(C1-C8)Alkyl, N(C1-C8)Alkyl₂, C1-C6-Alkoxy oder C1-C6-Alkyl-OH substituiert sein können und bei dem mindestens eine OH-Gruppe entweder an dem C1 bis C10 Alkylrest oder an einem Substituenten vorhanden ist,
oder ein cycloaliphatischer Rest mit typischerweise 5 bis 10 C-Atomen, bei dem ein oder mehrere nicht benachbarte Methylengruppen durch O, C=O, S, S=O, SO₂, NH, NOH, N ersetzt sein können und/oder bei dem ein oder mehrere H-Atome des cycloaliphatischen Restes unabhängig voneinander durch C1-C6-Alkyl, C5-C10-Aryl, Halogen, NH₂, NH(C1-C8)Alkyl, N(C1-C8)Alkyl₂, C1-C6-Alkoxy oder C1-C6-Alkyl-OH substituiert sein können, wobei mindestens eine OH-Gruppe entweder am cycloaliphatischen Ring oder an einer Seitenkette bzw. einem Substituenten vorhanden ist, oder ein
C6 bis C18 Aryl-Rest, wobei ein oder mehrere H-Atome in dem Aryl-Rest unabhängig voneinander durch Hydroxygruppen, C1-C6-Alkyl, C5-C10-Aryl, Halogen, NH₂, NH(C1-C8)Alkyl, N(C1-C8)Alkyl₂, C1-C6-Alkoxy oder C1-C6-Alkyl-OH substituiert sein können, wobei mindestens eine OH-Gruppe entweder am Aryl-Rest oder an einer Seitenkette bzw. einem Substituenten vorhanden ist, oder ein
C5 bis C18 Heteroaryl-Rest, wobei ein oder mehrere H-Atome in dem Heteroaryl-Rest unabhängig voneinander durch Hydroxygruppen, C1-C6-Alkyl, C5-C10-Aryl, Halogen, NH₂, NH(C1-C8)Alkyl, N(C1-C8)Alkyl₂, C1-C6-Alkoxy oder C1-C6-Alkyl-OH substituiert sein können, wobei mindestens eine OH-Gruppe entweder am Heteroaryl-Rest oder an einer Seitenkette bzw. einem Substituenten vorhanden ist.

3. Hydrophiles vernetztes Polymer entsprechend Anspruch 1 oder 2, **dadurch gekennzeichnet, dass** als hydrophil substituierter Alkylvinylether 1,2-Ethandiolmonovinylether, 1,3-Propandiolmonovinylether, 1,4-Butandiolmonovinylether, 1,6-Hexandiolmonovinylether, Diethylenglykolmonovinylether oder Cyclohexandimethanolmonovinylether eingesetzt wird.

4. Hydrophiles vernetztes Polymer nach einem oder mehreren der Ansprüche 1 bis 3, **dadurch gekennzeichnet, dass** als Vernetzer Divinylethylenharnstoff (1,3-Divinylimidazolin-2-on) oder Divinylpropylenharnstoff (1,3-Divinyl-tetrahydropyrimidin-2-on) eingesetzt wird.

5. Hydrophiles vernetztes Polymer nach einem oder mehreren der Ansprüche 1 bis 4, **dadurch gekennzeichnet, dass** das Polymer porös mit Porengrößen zwischen 2 und 200 nm ist.

6. Hydrophiles vernetztes Polymer nach einem oder mehreren der Ansprüche 1 bis 5, **dadurch gekennzeichnet, dass** das Polymer in Form von Partikeln mit einem Durchmesser zwischen 3 und 300 µm vorliegt.

7. Hydrophiles vernetztes Polymer nach einem oder mehreren der Ansprüche 1 bis 6, **dadurch gekennzeichnet, dass** das Polymer mit Separationseffektoren derivatisiert ist.

8. Hydrophiles vernetztes Polymer nach einem oder mehreren der Ansprüche 1 bis 7, **dadurch gekennzeichnet, dass** das Polymer mit tentakelartigen Strukturen derivatisiert ist, die durch Pfropfpolymerisation unter Cer(IV)-Katalyse auf das Polymer aufgebracht wurden.

9. Hydrophiles vernetztes Polymer nach Anspruch 8, **dadurch gekennzeichnet, dass** die tentakelartigen Strukturen Copolymeriate sind, die aus zwei oder mehreren unterschiedlichen Monomeren erzeugt wurden.

10. Verfahren zur Herstellung von Polymeren, **dadurch gekennzeichnet, dass** zumindest ein hydrophil substituierter Alkylvinylether der Formel I und zumindest ein Vernetzer entsprechend Formel II und/oder III und/oder IV copolymerisiert werden, mit 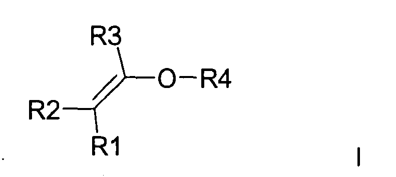 wobei R1, R2, R3 unabhängig voneinander H oder C1 bis C6 Alkyl, bevorzugt H oder -CH₃ sein können
und R4 ein Rest ist, der zumindest eine Hydroxylgruppe trägt und 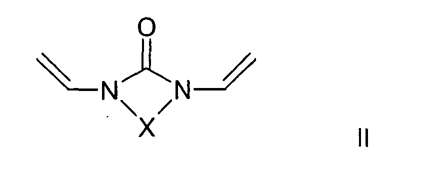 wobei X ein zweiwertiger Alkylrest mit 2 bis 5 C-Atomen ist, bei dem ein oder mehrere nicht benachbarte und nicht in direkter Nachbarschaft von N befindliche Methylengruppen durch O, C=O, S, S=O, S02, NH, NOH oder N ersetzt sein können und ein oder mehrere H-Atome der Methylengruppen unabhängig voneinander durch Hydroxylgruppen, C1-C6-Alkyl, Halogen, NH₂, C5-C10-Aryl, NH-(C1-C8)-Alkyl, N-(C1-C8)-Alkyl₂, C1-C6-Alkoxy oder C1-C6-Alkyl-OH substituiert sein können, und 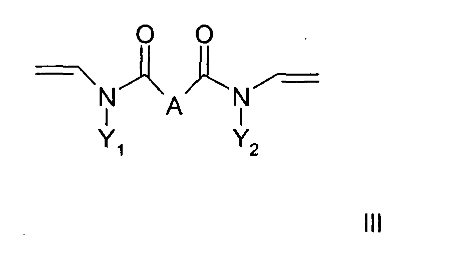 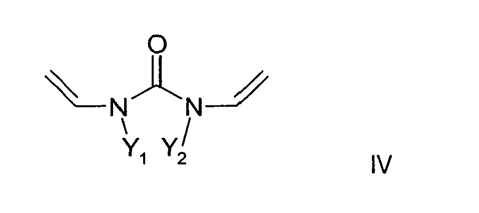 wobei Y1 und Y2 in Formel III und IV unabhängig voneinander
C1 bis C10 Alkyl oder Cycloalkyl sind, wobei ein oder mehrere nicht benachbarte Methylengruppen oder nicht in direkter Nachbarschaft von N befindliche Methylengruppen durch O, C=O, S, S=O, SO₂, NH, NOH oder N ersetzt sein können und ein oder mehrere H der Methylengruppen unabhängig voneinander durch Hydroxygruppen, C1-C6-Alkyl, Halogen, NH₂, C5-C10-Aryl, NH(C1-C8)Alkyl, N(C1-C8)Alkyl₂, C1-C6-Alkoxy oder C1-C6-Alkyl-OH substituiert sein können,
oder C6 bis C18 Aryl sind, wobei ein oder mehrere H in dem Arylsystem unabhängig voneinander durch Hydroxygruppen, C1-C6-Alkyl, Halogen, NH₂, NH(C1-C8)Alkyl, N(C1-C8)Alkyl_{2,} C1-C6-Alkoxy oder C1-C6-Alkyl-OH substituiert seinkönnen und
*A* ein zweiwertiger Alkylrest mit 2 bis 5 C-Atomen ist, bei dem ein oder mehrere nicht benachbarte Methylengruppen oder nicht in direkter Nachbarschaft von N befindliche Methylengruppen durch O, C=O, S, S=O, SO₂, NH, NOH oder N ersetzt sein können und ein oder mehrere H der Methylengruppen unabhängig voneinander durch Hydroxygruppen, C1-C6-Alkyl, Halogen, NH₂, C5-C10-Aryl, NH(C1-C8)Alkyl, N(C1-C8)Alkyl₂, C1-C6-Alkoxy oder C1-C6-Alkyl-OH substituiert sein können.

11. Verfahren nach Anspruch 10, **dadurch gekennzeichnet, dass** ein hydrophil substituierter Alkylvinylether der Formel I eingesetzt wird, in dem
R4
ein geradkettiger oder verzweigter C1 bis C10 Alkylrest ist, bei dem ein oder mehrere nicht benachbarte Methylengruppen durch O, C=O, S, S=O, SO₂, NH, NOH, N ersetzt sein können und/oder bei dem ein oder mehrere H-Atome unabhängig voneinander durch C1-C6-Alkyl, C5-C10-Aryl, Halogen, NH₂, NH(C1-C8)Alkyl, N(C1-C8)Alkyl₂, C1-C6-Alkoxy oder C1-C6-Alkyl-OH substituiert sein kann und bei dem mindestens eine OH-Gruppe entweder an dem C1 bis C10 Alkylrest oder an einem Substituenten vorhanden ist,
oder ein cycloaliphatischer Rest mit typischerweise 5 bis 10 C-Atomen, bei dem ein oder mehrere nicht benachbarte Methylengruppen durch O, C=O, S, S=O, SO₂, NH, NOH, N ersetzt sein können und/oder bei dem ein oder mehrere H-Atome des cycloaliphatischen Restes unabhängig voneinander durch C1-C6-Alkyl, C5-C10-Aryl, Halogen, NH₂, NH(C1-C8)Alkyl, N(C1-C8)Alkyl₂. C1-C6-Alkoxy oder C1-C6-Alkyl-OH substituiert sein können, wobei mindestens eine OH-Gruppe entweder am cycloaliphatischen Ring oder an einer Seitenkette bzw. einem Substituenten vorhanden ist, oder ein
C6 bis C18 Aryl-Rest , wobei ein oder mehrere H-Atome in dem Aryl-Rest unabhängig voneinander durch Hydroxygruppen, C1-C6-Alkyl, C5-C10-Aryl, Halogen, NH₂, NH(C1-C8)Alkyl, N(C1-C8)Alkyl₂, C1-C6-Alkoxy oder C1-C6-Alkyl-OH substituiert sein können, wobei mindestens eine OH-Gruppe entweder am Aryl-Rest oder an einer Seitenkette bzw. einem Substituenten vorhanden ist, oder ein
C5 bis C18 Heteroaryl-Rest, wobei ein oder mehrere H-Atome in dem Heteroaryl-Rest unabhängig voneinander durch Hydroxygruppen, C1-C6-Alkyl, C5-C10-Aryl, Halogen, NH₂, NH(C1-C8)Alkyl, N(C1-C8)Alkyl₂, C1-C6-Alkoxy oder C1-C6-Alkyl-OH substituiert sein können, wobei mindestens eine OH-Gruppe entweder am Heteroaryl-Rest oder an einer Seitenkette bzw. einem Substituenten vorhanden ist.

12. Verfahren nach Anspruch 10 oder 11, **dadurch gekennzeichnet, dass** eine radikalische Suspensionspolymerisation durchgeführt wird.

13. Verfahren nach einem oder mehreren der Ansprüche 10 bis 12, **dadurch gekennzeichnet, dass** eine radikalische Suspensionspolymerisation in Wasser als Suspensionsmittel in Gegenwart von mindestens einem Suspensionsstabilisator und optionalen weiteren Zusätzen, bevorzugt anorganischen Salzen und grenzflächenaktiven Verbindungen durchgeführt wird.

14. Verfahren nach einem oder mehreren der Ansprüche 10 bis 13, **dadurch gekennzeichnet, dass** die Temperatur während der Polymerisation zwischen 40 und 100°C liegt.

15. Verfahren nach einem oder mehreren der Ansprüche 10 bis 14, **dadurch gekennzeichnet, dass** hydrophil substituierte Alkylvinylether und Vernetzer in einem Massenverhältnis zwischen 10:90 und 80:20 eingesetzt werden.

16. Chromatographiesäule, Kapillare oder Kartusche enthaltend ein Polymer entsprechend einem oder mehreren der Ansprüche 1 bis 9 als Sorbens oder Trägermaterial.

17. Verwendung eines hydrophilen vernetzten Polymers entsprechend einem oder mehreren der Ansprüche 1 bis 9 als Sorbens in der Chromatographie, als Trägermaterial zur Immobilisierung biologisch oder katalytisch aktiver Substanzen oder als Trägermaterial für eine Festphasensynthese.
